# EUROPEAN PATENT APPLICATION

(11) **EP 0 802 414 A2**
(43) Date of publication of application: **22.10.1997**
(21) Application number: 97302609.9
(22) Date of filing: 16.04.1997
(51) Int. Cl.: G01P 3/44

(54) **Shaft seal and shaft sensor**

(30) Priority: 19.04.1996 GB 9608213
(71) Applicant: DOWTY SEALS LIMITED, Tewkesbury Gloucestershire GL20 8JS (GB)
(72) Inventor: Sleigh, Neville J.H., Tweskesbury, Gloucestershire GL20 8BQ (GB); Harris, Robert G., Longlevens, Gloucestershire GL2 9LB (GB)
(74) Representative: Beck, Simon Antony

(57) **Abstract**

A combined shaft seal and position sensor has a seal (6) and a sensor (4) integrally formed within a housing (2). Such an arrangement saves space and also enables bearing wear to be measured.

## Description

The present invention relates to a combined shaft seal and shaft position and/or speed sensor.

It is known to seal the passage of a shaft through a casing or similar by providing a seal extending between the shaft and the casing. It is also known to provide position and/or speed sensors upon a shaft so as to measure the angular position of the shaft. Such position and/or sensors are normally provided by a toothed wheel cooperating with a variable reluctance detector.

According to the present invention, there is provided a combined shaft seal and shaft sensor, comprising a housing, at least one seal and at least one sensor for measuring the position and/or speed of a shaft in substantially fluid sealed engagement with the at least one seal, the at least one sensor and the at least one seal being held within the housing.

It is thus possible to provide a combined sensor and seal arrangement as a single assembly which is more compact than providing a discrete position and/or speed sensor and a discrete seal. Furthermore, since it is relatively common for seals to be located adjacent to bearings which may be inaccessible to discrete sensors, the provision of the sensor within the seal arrangement helps ensure that the shaft is concentric to the sensor. Furthermore, the close proximity of the or each seal to the shaft bearing enables the sensor to provide vibration and/or temperature measurements of the bearing.

Preferably the sensor and seal are formed as an integral assembly. Alternatively the at least one speed sensor may be removable.

Preferably, the or each sensor comprises a pick-up element. The pick-up element is, in use, positioned adjacent to a portion of the shaft which carries a plurality of markers.

Preferably, the sensor is a magnetic sensor and the markers comprise areas having alternating magnetic properties. This variation in magnetic property can be achieved by adding a toothed wheel or sleeve to the shaft, or by forming notches, slots, or other formations in the shaft such that the size of the magnetic gap between the pick-up element and the markers varies as the shaft rotates.

Preferably, the pick-up element has a plurality of teeth extending therefrom towards the shaft. The inter-tooth spacing substantially corresponds to the spacing between the markers on the shaft, such that the teeth and the markers can become aligned with one another as the shaft rotates. This arrangement increases the magnetic flux change between the positions where the teeth of the pick-up element align with the markers on the shaft, and those positions where the teeth align with the gaps between marker, thereby increasing the induced electromotive force in the sensor. This enhances the signal to noise ratio of measurements made with the sensor.

Preferably, the pick-up element is connected to a sensor coil and to an energiser via a pole piece. The pole piece may be a permanent magnet. Advantageously, the sensor coil and the energiser are provided as a combined unit. The sensor coil can be driven with a substantially constant current so as to energise the sensor and changes in the magnetic flux passing between the shaft and the pick-up element can be detected as changes in the voltage across the coil. Alternatively, when the pole piece and/or the pick-up element is a permanent magnet energiser, the power supply to the coil may be omitted.

Advantageously, the pole piece extends towards a first side of the combined seal and sensor unit. The pole piece may extend fully to a first side of the combined unit. Advantageously, the seal is held at a peripheral edge thereof by a seal clamp. The seal clamp may be magnetically connected to the pole piece so as to form part thereof.

Advantageously, the pick-up element is located towards a second side of the combined seal and sensor unit so as to maximise the distance between the pick-up element and the pole piece. This helps ensure that the distance between the pole piece and the pick-up element is greater than the sum of the gap from the pole piece to the shaft, and the gap from the shaft to the pick-up element. This ensures that the major flux path between the pole piece and pick-up element is via the shaft and through the markers.

Advantageously, the coil may be wound onto the pole piece and the seal clamp connected to the pole piece prior to the formation of the housing around the seal and the sensor. The housing may be formed as a moulded element thereby sealing the coil against the ingress of fluid. Alternatively, the seal and sensor may be enclosed in a housing formed of any non-magnetic materials.

Advantageously, one or more further sensors may be provided within the combined seal and sensor unit. One or more of the markers on the shaft may be modified so as to be non-uniform, for example, so as to form an enlarged tooth or an enlarged gap in order to provide a reference datum for the angular position of the shaft. By comparing the times or pulse count at which the reference datum passes the sensor or sensors, it is possible to determine the direction of rotation of the shaft. Analysis of the frequency of the wave form detected from the sensors enables the rotational speed of the shaft to be determined. When two or more non-uniform markers are provided, the direction of rotation can be observed using a single sensor if the markers are sufficiently different, such that they can be distinguished from each other.

The present invention will further be described, by way of example, with reference to the accompanying drawings, in which:
Figure 1 is a schematic cross-section of a combined seal and sensor constituting an embodiment of the present invention;

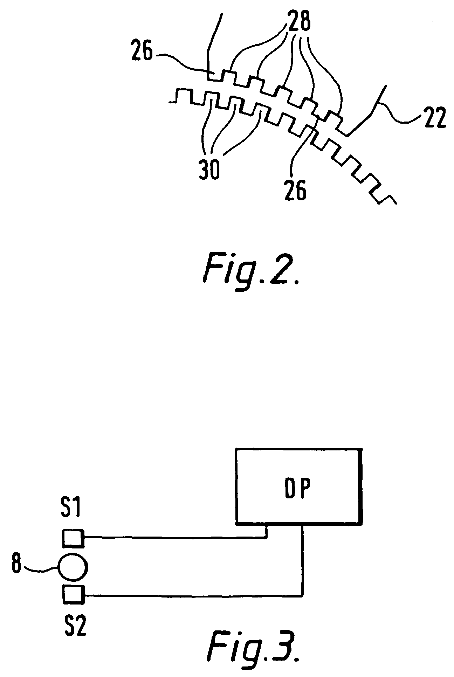

Figure 2 is a schematic view along the axis of the shaft in the region of the pick-up element; and
Figure 3 schematically illustrates a combination of the combined seal and sensor and a data processing unit.

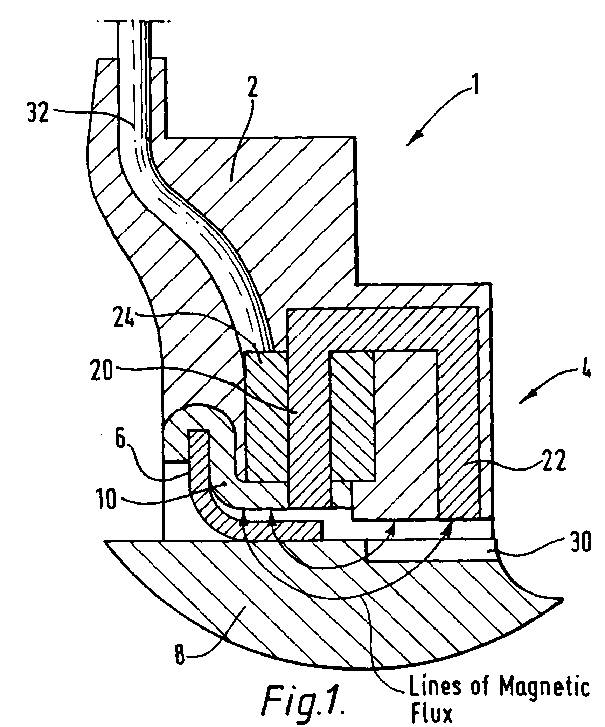

The combined seal and sensor unit 1 shown in Figure 1 comprises a seal housing 2 enclosing a sensor, indicated generally as 4, and a sealing element 6. The housing 1 extends circumferentially around a rotatable shaft 8. The radially inwardly facing surfaces of the housing 1 define a bore therein and the shaft 8 extends through and is substantially coaxial with the bore. A seal clamp 10 engages and holds a radially outermost portion of the sealing element 6 thereby securing the seal to the clamp 10 and consequently the seal to the housing 2.

The sensor comprises a substantially U-shaped pole piece 20 (which may be a permanent magnet) which provides a magnetic link between a pick-up element 22 and a magnetic coil 24. The pick-up element has a castellated portion containing a plurality of teeth 26 separated by recesses 28. The shaft 8 is similarly profiled with a plurality of teeth separated by recesses (this structure can be formed by forming a plurality of notches or slots into the shaft). The inter-tooth distances on the shaft 8 and the pick-up element 22 are selected such that the teeth can become radially aligned as the shaft rotates. When the teeth 26 of the pick-up element become aligned with the teeth 30 on the shaft 8, the magnetic gap between the pick-up element and the shaft is relatively small, and hence the flux flow through the magnetic circuit increases. When the teeth 26 of the pick-up element align with the notches in the shaft 8, the effective magnetic gap between the pick-up element and the shaft 8 increases resulting in a decrease in the flux flowing through the magnetic circuit. This change in flux in the magnetic circuit with rotation of the shaft causes an alternating EMF to be induced in the coil 24 which can be detected as a voltage change across the coil. The pick-up element 22 is located towards a second side of the combination seal and sensor. The opposing end of the pole piece is magnetically linked to the seal clamp 10 and forms an extended pole piece towards the first side of the combination seal and sensor unit. This arrangement helps ensure that the flux is concentrated in the vicinity of the pick-up element to form a closed loop magnetic field. The field may be in an axial or circumferential plane.

Power to produce a constant magnetic field is provided from a constant current generator (not shown) and supplied to the coil 24 via wires 32 extending through the housing. The voltage across the coil can be measured in order to detect the changes in EMF and hence the passage of teeth beneath the pick-up element 22.

The frequency of the signal is directly related to the rotational speed of the shaft. In an embodiment of this invention, the shaft is provided with 180 teeth spaced uniformly around its circumference thereby giving a positional resolution of 2°. A non-uniform tooth (not shown) provides a reference datum thereby enabling the angular position of the shaft to be positively identified once per revolution. The passage of teeth past the sensor element 22 can then be counted in order to infer the angular position of the shaft when the non-uniform tooth is away from the sensor element 22.

A sensor can also provide information concerning longitudinal motion of the shaft and radial deflection of the shaft.

In order to detect axial deflection or motion, the sensor element 22 and the teeth 30 of the shaft 8 should be arranged such that they partially overlap. Additionally, or alternatively, the teeth can have a tapered profile. This can be selected so as to cause a variation in amplitude with varying axial position, for example, by tapering the height of the teeth.

Radial end/or axial deflection of the shaft is indicative of worn bearings, and will cause the distance between the shaft and the sensor element 22 to vary slightly in a cyclical fashion. These movements will superimpose further sinusoidal variations upon the variation caused by the passage of teeth past the sensor element 22. These further sinusoidal variations will be observed as an envelope modulating the normal signal received from the sensor. Thus, the detection of this additional modulation can serve as an indication of bearing wear. It is possible to discriminate between radial and axial vibration of the shaft and this can be especially valuable as a diagnostic tool. If two sensors are provided on the shaft at substantially diametrically opposed positions, then radial movement of the shaft will cause the distance between the shaft and a first sensor to decrease while the distance between the shaft and the second sensor increases. Thus, sensor signals resulting from radial vibration will be in antiphase. However, axia! motion of the tapered teeth past the sensors will result in signals which are in phase. By suitable signal processing, for example, by applying the signals to sum and difference amplifiers and compensating for the signals indicative of rotational speed, further signals representing radial vibration and axial vibration can be established. A suitable arrangement comprising first and second sensors S1 and S2 connected to a data processor DP, such as a digital computer or suitable electronics, is shown in figure 3.

It will be appreciated that this technique can be adapted to work when the sensors are not diametrically opposed.

The provision of a further sensor within the combined sensor and seal element, where the second sensor is angularly displaced from the first sensor, enables the direction of rotation of the shaft to be determined by comparing the phase of the signals received from the sensor. Additional sensors can be provided to enhance the resolution available from the combined seal and sensor unit. If, for example, a second sensor is positioned such that the teeth of its pick-up element align with the edge of the teeth on the shaft when the teeth of the first sensor align with the teeth on the shaft, then the outputs of the two sensors could be combined to double the resolution available, i.e. to 1° in the example given hereinabove. In this case, the second sensor is offset from the first sensor by (N + ¼) of the tooth pitch, where N is a positive number. Further sensors could be provided, suitably spaced, to provide further increases in resolution.

Where the energiser is a permanent magnet, such that there is no power dissipated in the sensor coil, measurements of the coil resistance may be made and equated with the seal/bearing temperature.

It is thus possible to provide a reliable and inexpensive combined seal and shaft motion sensor which saves space, provides an encapsulated sensor, and also provides indication of bearing wear and/or temperature. A combined seal and sensor constituting an embodiment of the present invention may be used within engine management control systems.

## Claims

1. A combined shaft seal and shaft sensor, characterised by a housing (2), at least one seal (6), and at least one sensor (4) for measuring at least one of the position and speed of a shaft (8) in substantially fluid sealed engagement with the at least one seal (6), the at least one seal (6) and the at least one sensor (4) being held within the housing (2).

2. A combined shaft seal and shaft sensor as claimed in claim 1, characterised in that the at least one sensor (4) comprises a pick-up element (22) which is, in use, positioned adjacent a portion of the shaft (8) which carries at least one marker (30).

3. A combined shaft seal and shaft sensor as claimed in claim 2, characterised in that the at least one sensor is a magnetic sensor (4) and the at least one marker (30) comprises an area having a changed magnetic property compared to the remainder of the portion of the shaft.

4. A combined shaft seal and shaft sensor as claimed in claim 3, characterised in that there are a plurality of markers (30) having alternating magnetic properties.

5. As combined shaft seal and shaft sensor as claimed in claim 4, characterised in that the alternating magnetic properties are achieved by the provision of one of a toothed wheel, a sleeve, notches, slots and formations in the shaft (8), such that a size of a magnetic gap between the pick-up element (22) and the markers (30) varies as the shaft (8) rotates.

6. A combined shaft seal and shaft sensor as claimed in claim 4, characterised in that the markers (30) are regularly spaced around the shaft (8) and the pick-up element (22) has a plurality of teeth (26) extending therefrom, the intertooth spacing substantially corresponding to the spacing between the markers on the shaft (8) such that the teeth (26) and the markers (30) can become aligned with one another as the shaft (8) rotates.

7. A combined shaft seal and shaft sensor as claimed in any one of the preceding claims characterised in that the pick-up element (22) is connected to a sensor coil (24) and to an energiser via a pole piece (20).

8. A combined shaft seal and shaft seal sensor as claimed in claim 7, characterised in that the energiser is a permanent magnet.

9. A combined shaft seal and shaft seal sensor as claimed in claim 7, characterised in that the sensor coil (24) is supplied with a current so as to energise the sensor and changes in magnetic flux passing between the shaft (8) and the pick-up element (22) are detected as changes in the voltage across the sensor coil (24).

10. A combined shaft seal and shaft seal sensor as claimed in claim 7, characterised in that the pole piece (20) extends towards a first side of the combined shaft seal and shaft seal sensor, and the at least one seal (6) is held at a peripheral edge thereof by a seal clamp and the seal clamp magnetically forms part of the pole piece (20).

11. A combined shaft seal and shaft seal sensor as claimed in claim 10, characterised in that the pick-up element (22) is located towards a second side of the combined seal and sensor unit so as to increase the distance between the pick-up element (22) and the pole piece (20).

12. A combined shaft seal and shaft seal sensor as claimed in claim 4, characterised in that the markers are modified in order to provide a reference datum for the angular position of the shaft (8).

13. A combined shaft seal and shaft sensor as claimed in any one of the preceding claims, characterised by first and second sensors positioned such that comparison of their outputs enables the direction of rotation of the shaft to be determined.

14. A combined shaft seal and shaft sensor as claimed in any one of the preceding claims, characterised by further comprising a data processor (DP) for analysing the output of the at least one sensor (4; S1, S2) to determine at least one of speed of rotation, direction of rotation, axial displacement, radial displacement and temperature.

15. A method of producing a combined shaft seal and shaft sensor, comprising a housing, a seal and a sensor, the sensor comprising a coil, a pole piece and a seal clamp connected to the pole piece, in which the coil is wound onto the pole piece and the seal clamp is connected to the pole piece prior to the formation of the housing around the seal and sensor.
